# EUROPEAN PATENT SPECIFICATION

(11) **EP 2 645 781 B1**
(45) Date of publication and mention of the grant of the patent: **15.03.2017**
(21) Application number: 11851251.6
(22) Date of filing: 23.12.2011
(51) Int. Cl.: H04W 76/02

(54) **METHOD AND APPARATUS FOR PROTECTING CONTENT IN A WI-FI DIRECT COMMUNICATION SCHEME**
VERFAHREN UND VORRICHTUNG ZUM SCHUTZ VON INHALTEN IN EINEM WI-FI-DIREKTKOMMUNIKATIONSSCHEMA
PROCÉDÉ ET APPAREIL POUR PROTÉGER UN CONTENU DANS UN SCHÉMA DE COMMUNICATION DIRECTE WIFI

(30) Priority: 24.12.2010 US 201061427156 P
(43) Date of publication of application: 02.10.2013
(60) Divisional application: 17154056.0
(73) Proprietor: Samsung Electronics Co., Ltd., Suwon-si, Gyeonggi-do, 443-742 (KR)
(72) Inventor: JEONG, Jin-Woo, Seoul 151-080 (KR); VERMA, Lochan, Seoul 150-797 (KR)
(74) Representative: Appleyard Lees IP LLP
(86) International application number: PCT/KR2011/010067
(87) International publication number: WO 2012/087078

(56) References cited:
- WO-A1-2010/086699
- JP-A- 2007 102 782
- KR-A- 20090 068 344
- KR-A- 20100 033 929
- US-A1- 2010 322 213
- ANDREAUX J ET AL: "Copy protection system for digital home networks", IEEE SIGNAL PROCESSING MAGAZINE, IEEE SERVICE CENTER, PISCATAWAY, NJ, US, vol. 21, no. 2, 1 March 2004 (2004-03-01), pages 100-108, XP011109338, ISSN: 1053-5888, DOI: 10.1109/MSP.2004.1276118
- MICHAEL MONTEMURRO ET AL: "IEEE 802.11 Wireless LANs TDLS Peer Discovery", INTERNET CITATION, 18 January 2010 (2010-01-18), pages 1-13, XP002656379, Retrieved from the Internet: URL:www.ieee.org [retrieved on 2011-08-04]
- Wi-Fi Alliance: "Wi-Fi CERTIFIED Wi-Fi Direct", , 1 October 2010 (2010-10-01), pages 1-14, XP055041124, Retrieved from the Internet: URL:http://www.wi-fi.org/knowledge-center/ white-papers/wi-fi-certified-wi-fi-direct% E2%84%A2-personal-portable-wi-fi%C2%AE-con nect-devices [retrieved on 2012-10-16]

## Description

### BACKGROUND OF THE INVENTION

### 1. Field of the Invention

The present invention relates to a method and device for protecting content in a Wi-Fi direct communication scheme.

### 2. Description of the Related Art

A Wi-Fi direct communication scheme is different from the conventional Wi-Fi scheme, and is a network suggested by an Wi-Fi alliance that is connected by a peer-to peer scheme between devices even though Wi-Fi devices do not participate in a home network, an office network and a hot spot network.

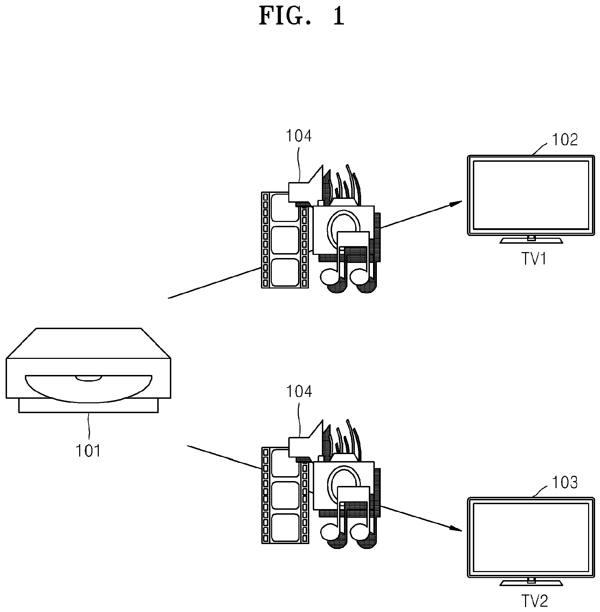

FIG. 1 illustrates a Wi-Fi direct communication scheme according to a prior art.

In FIG. 1, a DVD player 101 uses the Wi-Fi direct communication scheme to transmit a content 104 such as music, photos and moving images to a TV1 102 or a TV2 103 which is a display device.

The DVD player 101 may be another device that stores a content, such as an MP3 player, a personal computer and a simple storage medium.

The TV1 102 or the TV2 103 may be another device that displays a content to a user, such as a monitor and a speaker.

A content 104 such as music, a photo and a moving image may be a content protected by a copyright.

The conventional Wi-Fi direct (P2P) scheme is not a standard that has been suggested in consideration of a display device, but is a standard that has been suggested on the basis of connectivity between devices. Hence, it was not possible to recognize whether a device supports content protection before setting connection between devices.

In the Wi-Fi direct scheme, it is not possible for the DVD player 101 to recognize whether each TV supports content protection before setting connection with the TV1 102 and the TV2 103 of FIG. 1. When assuming that the TV1 102 is a device that does not support content protection and the TV2 103 is a device that supports content protection, if the DVD player 101 is connected to the TV1 102 through the Wi-Fi direct scheme and the content 104 protected by the copyright is intended to be replayed, a message indicating that the content cannot be replayed in the TV1 101 is displayed. Thus, when the user desires to replay the content 104 through the DVD player 101, the user inconveniently needs to wait for connection between the DVD player 101 and the TV2 103 and then replay the content.

Further, the TV1 102 does not support content protection and thus cannot replay the content 104, but unnecessary power is consumed to perform connection with the DVD player 101.

WO2010/086699 describes a method for device capability advertising and discovery in a wireless network in which in response to receiving a capability advertisement message which comprises role capabilities, an activation message which requests at least one role capability of the capability is sent to a device on a bearer; and in response to the activation message, from the device on the bearer is received a notification message which indicates whether the role capability of the activation message was accepted.

The article Andreaux, J.-P.; Durand, A.; Furon, T.; Diehl, E., "Copy protection system for digital home networks," in Signal Processing Magazine, IEEE, vol.21, no.2, pp.100, Mar 2004 describes the rationale supporting the design of a copy protection system called SmartRight. While carefully presenting the motivation, some light is shed on the very peculiar problems raised by the enforcement of copy protection. The article also explores less technical but highly important issues such as the legal and commercial aspects.

### SUMMARY OF THE INVENTION

The present invention provides a method for receiving information on whether a device supports content protection in a device discovery procedure of searching for a surrounding device when performing communication between display devices according to a Wi-Fi direct scheme in order to provide a communication scheme for performing an efficient Wi-Fi direct communication scheme between display devices.

According to the present invention there is provided an apparatus and method as set forth in the appended claims. Other features of the invention will be apparent from the dependent claims, and the description which follows.

### BRIEF DESCRIPTION OF THE DRAWINGS

The above and other features and advantages of the present invention will become more apparent by describing in detail exemplary embodiments thereof with reference to the attached drawings in which:
FIG. 1 is a conceptual diagram illustrating a Wi-Fi direct communication scheme according to a prior art;
FIG. 2 is a flowchart illustrating a device discovery procedure of a first device according to an embodiment of the present invention;
FIG. 3 is a flowchart illustrating a device discovery procedure of a first device according to another embodiment of the present invention;
FIG. 4 is a block diagram illustrating a structure of a first device and a second device according to an embodiment of the present invention;
FIG. 5 is a diagram illustrating a Wi-Fi display (WFD) information element (IE) according to an embodiment of the present invention;
FIG. 6 is a diagram illustrating a general format of a WFD subelement according to an embodiment of the present invention;
FIG. 7 is a diagram illustrating a WFD subelement ID according to an embodiment of the present invention;
FIG. 8 is a diagram illustrating a WFD device information subelement according to an embodiment of the present invention;
FIG. 9 is a diagram illustrating a WFD device information field according to an embodiment of the present invention; and
FIG. 10 is a signal flowchart of a WFD communication according to an embodiment of the present invention.

### DETAILED DESCRIPTION OF THE INVENTION

The present invention will now be described more fully with reference to the accompanying drawings, in which exemplary embodiments of the invention are shown. Like reference numerals in the drawings denote like elements, and thus their description will be omitted. The size of each component of drawings may be exaggerated for clarity of description.

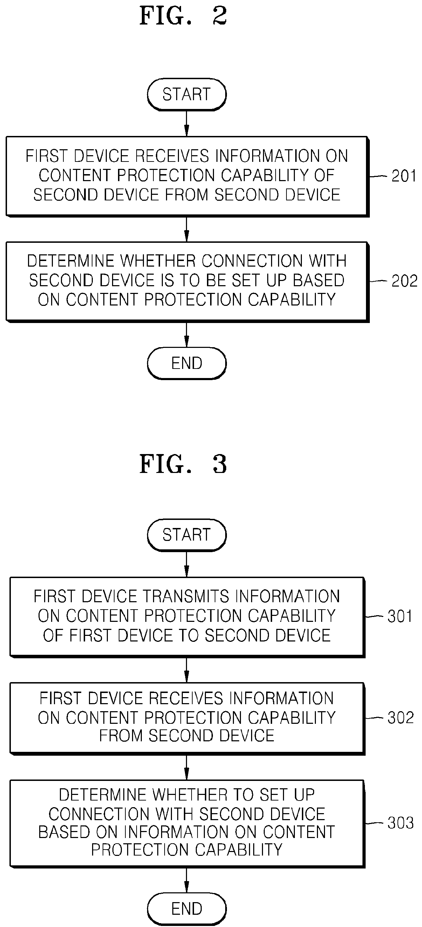

FIG. 2 is a flowchart illustrating a device discovery procedure of a first device according to an embodiment of the present invention.

The device discovery procedure is a procedure for finding a surrounding device for communication, and is a procedure of searching for a device that supports a Wi-Fi direct scheme among devices existing around a device in order for the device to perform connection. Furthermore, when there is a device that supports a Wi-Fi direct scheme, information on each device may be received.

However, the conventional Wi-Fi direct (P2P) scheme is not a standard that has been suggested in consideration of a display device, and thus there is no procedure for appropriately protecting a content in the device discovery procedure.

In operation 201, the first device receives information on content protection capability of the second device from the second device in the device discovery procedure.

The information on the content protection capability is information whether the device supports a content protection.

The information on the content protection capability of the second device received from the second device may be included in a probe response message. The probe response message is a message of receiving device information in the device discovery procedure of the Wi-Fi direct communication scheme.

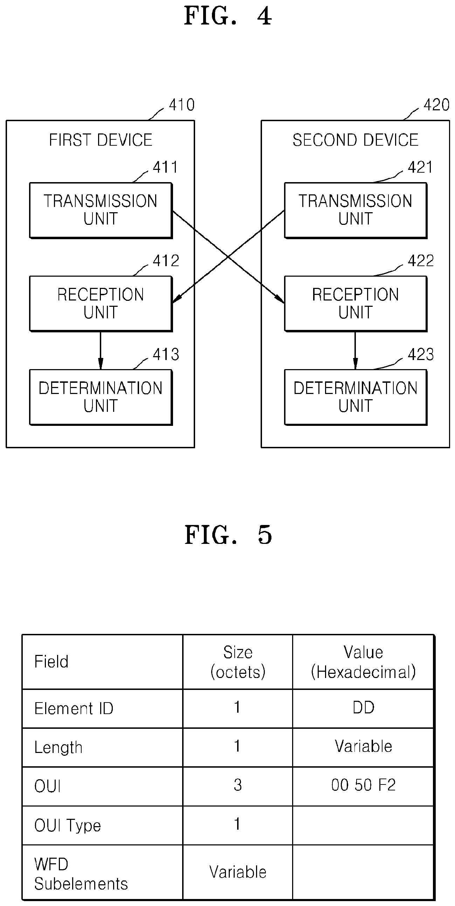

Specifically, the information on the content protection capability may be included in the Wi-Fi display information element (WFD IE). The WFD IE will be described later in detail with reference to FIG. 5.

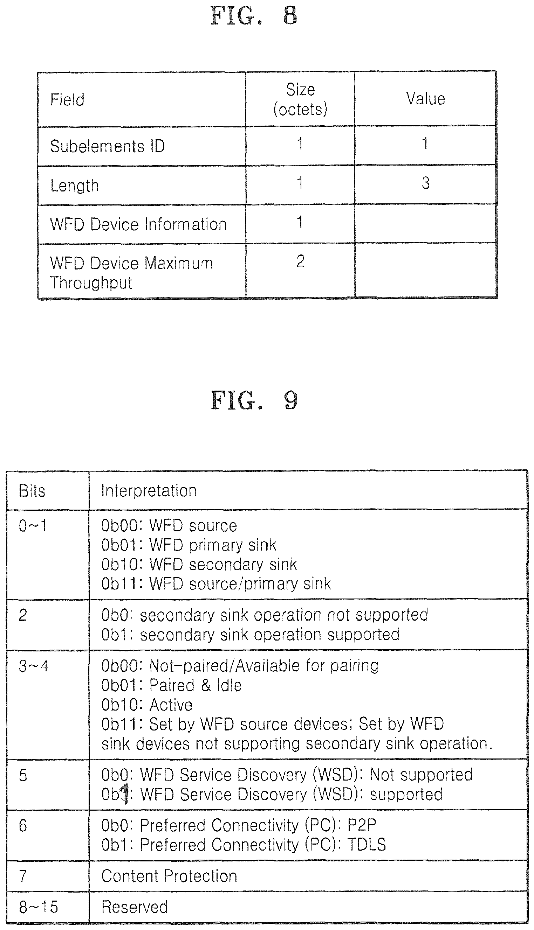

Furthermore, the information on the content protection capability may be included in the WFD information field within the WFD IE. The WFD information field will be described later in detail with reference to FIG. 8.

The information on the content protection capability may be information indicating whether the second device supports high definition content protection 2.0 (HDCP 2.0).

Here, the HDCP is one of copyright protection technologies for encrypting a path through which digital signals are transmitted and received from a moving image replay device to a display device, and preventing an unauthorized copy of a content, and is a standard designed to protect integrity of a content. The HDCP is a well known standard, and thus the detailed description thereof will be omitted here.

In operation 202, it is determined whether the first device may perform a connection setup procedure with the second device based on information on the content protection capability of the second device received in operation 201.

That is, the first device determines whether the second device supports content protection by the information received from the second device, and determines whether to perform a connection setup procedure with the second device.

Various methods may be used to determine whether to perform the connection setup procedure. For example, when there are a plurality of devices that support a Wi-Fi direct communication scheme, information on whether to perform a connection setup with another device may be received from the user by displaying whether the plurality of devices support content protection on the first device.

As another embodiment, a connection setup may be set to be automatically performed according to a priority that is set in the first device.

If there is only one device that supports the Wi-Fi direct communication scheme, the device may be set to display whether the device supports content protection before performing the connection setup.

FIG. 3 is a flowchart illustrating a device discovery procedure of a first device according to another embodiment of the present invention.

In the Wi-Fi direct scheme, the device determined the device that operates as an access point (AP) or the device that operates as a station after the connection setup procedure, and thus the role of each device is not determined in the device discover procedure. Hence, the second device may need the information of the first device after the connection setup procedure, and thus the second device also receives the information of the first device.

In operation 301, the first device transmits information on the content protection capability of the first device to the second device.

The information on the content protection capability transmitted by the first device to the second device may be included in a probe request message.

The probe request message is a message of transmitting device information in the device discovery procedure of the Wi-Fi direct communication scheme.

The information on the content protection capability may be included in WFD IE.

The information on the content protection capability may be included in the WFD device information field within the WFD IE.

The information on the content protection capability may be information indicating whether HDCP 2.0 is supported.

In operation 302, the first device receives information on the content protection capability from the second device as in operation 201 of FIG. 2.

In operation 303, the first device determines whether to set up connection with the second device based on the information on the content protection capability as in operation 202 of FIG. 2. The connection setup may be performed in various schemes as was described with reference to FIG. 2.

Furthermore, the second device may also determine connection with the first device based on the information on the content protection capability received from the first device.

FIG. 4 is a block diagram illustrating a structure of a first device and a second device according to an embodiment of the present invention.

The transmission unit 411 of the first device 410 transmits information on the content protection capability of the first device to the second device. As illustrated in FIG. 3, the information related to the content protection capability of the first device 410 may be included in the probe request message, WFD IE, and WFD device information field of the WFD IE.

A reception unit 412 of the first device 410 receives information related with the content protection capability of the second device 420 from the second device.

The determination unit 413 of the first device 410 determines whether to perform a connection setup procedure with the second device 420 based on the information related with the content protection capability of the second device which has been received by the reception unit from the second device 420.

The transmission unit of the second device 420 transmits the information related with the content protection capability of the second device 420 to the first device 410.

The reception unit 421 of the second device 420 receives information related with the content protection capability of the first device 410 from the first device 410.

A determination unit 423 of the second device determines whether to perform a connection setup procedure with the first device 410 based on information related with the content protection capability of the first device 410 received from the first device 410.

FIG. 5 is a diagram illustrating a Wi-Fi display (WFD) information element (IE) according to an embodiment of the present invention.

Here, WFD is a communication scheme, and refers to a scheme where communication is performed between display devices based on Wi-Fi direct standard.

WFD IE represents a format of a frame that receives basic information such as a device type and state. The probe request frame or probe response frame is also written according to the format of the WFD IE.

In the illustrated example, WFD IE includes Element ID, Length, OUI, OUI Type, and WFD Subelements. Respective sizes of Element ID, Length, OUI, and OUI TYPE fields are 1, 1, 3 and 1 octets, and the size of WFD Subelements is variable.

Element ID field is a field that is used when a vendor desires to make functions that are not defined in IEEE 802.11 standard, and Length field denotes the entire length of WFD IE.

OUI field is an abbreviation of Organization Unique Identifier and represents a unique identifier defined to distinguish each vendor, and OUI Type field represents the version of WFD IE.

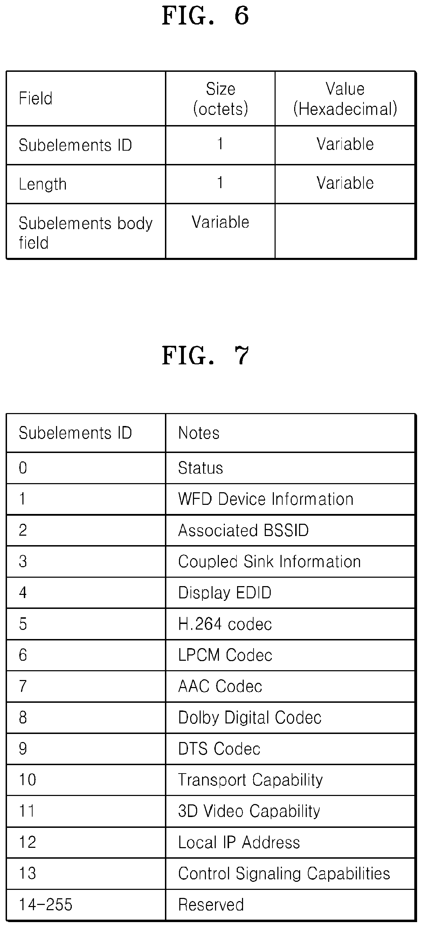

The content written in the WFD IE is not sufficient for the WFD Subelement field, and thus the points indicating detailed device information are included in the WFD Subelement field. The points included in the WFD Subelement field will be described in detail with reference to FIG. 6.

Some of WFD IE of the present invention may be omitted as is necessary.

FIG. 6 is a diagram illustrating a general format of a WFD Subelement according to an embodiment of the present invention.

Here, the WFD Subelement includes Subelement ID, Length, and Subelements body fields. Sizes of Subelement ID and Length fields are respectively 1, and the size of the Subelement body field is variable.

The Subelement ID of the present embodiment represents a type of the WFD Subelement, which will be described later in detail with reference to FIG. 7.

The Length field of the present embodiment represents the entire length of the WFD Subelement.

The Subelements body field of the present embodiment shows specific points of the Subelement.

Some of the WFD Subelements may be omitted as is necessary.

FIG. 7 is a diagram illustrating a WFD subelement ID according to an embodiment of the present invention.

WFD Device Information of the present embodiment refers to information on WFD device. In the present invention, the content protection capability of a device intended to be acquired before setting up connection is written on the WFD Subelement of the WFD Device Information type, which will be described in detail with reference to FIG. 8.

Status of the present embodiment represents status information of the device.

Associated BSSID of the present embodiment represents an identifier that identifies a basic service area in 802.11.

Display EDID of the present embodiment represents a type of data for transmitting display information of a device.

Coupled Sink Information of the present embodiment represents connection with another device.

H.264 Codec, LPCM Codec, AAC Codec, Dolby Digital Codec, and DTS Codec of the present embodiment show information on Codec. Each Codec is a well known standard in the art and thus detailed description on each Codec is omitted here.

Transport Capability, 3D Video Capability, Local IP Address, and Control Signaling Capabilities of the present embodiment show the capability and address of the device, and the detailed description thereof is omitted here.

Furthermore, the information related with content protection capability may be included in the Subelement ID by adding Content Protection Capability.

Some of Subelement IDs may be omitted as is necessary.

FIG. 8 is a diagram illustrating information included in a WFD device information Subelement according to an embodiment of the present invention.

When Subelement ID field of FIG. 7 is 1, Subelement about WFD Device Information is included. Here, the content related with device information is displayed in WFD device information in a bitmap format. The details are described with reference to FIG. 8.

WFD Device Maximum Throughput shows the maximum average throughput of the device.

FIG. 9 is a diagram illustrating a WFD device information field according to an embodiment of the present invention.

WFD device information field may be disclosed in a bitmap form.

First and second bits of WFD device information field (bits 0 and 1) of the present embodiment indicate a WFD source, a WFD sink, a primary sink device or a secondary sink device.

A third bit of WFD device information field (bit 2) of the present embodiment indicates whether a secondary sink operation is supported.

Fourth and fifth bits of WFD device information field (bits 3 and 4) of the present embodiment indicate a pairing state of the current device and whether paring is possible.

A sixth bit of WFD device information field (bit 5) of the present embodiment indicates whether a WFD service discovery procedure is supported.

A seventh bit of WFD device information field (bit 6) of the present embodiment indicates a connection scheme of the device. That is, the seventh bit indicates whether the device supports a Wi-Fi direct scheme, i.e., P2P scheme, or a tunneled direct link setup (TDLS) scheme. The TDLS scheme is not the Wi-Fi direct scheme, and is a scheme of wireless communication where communication is performed through AP.

An eighth bit of WFD device information field (bit 7) of the present embodiment indicates information on content protection capability of the device. As illustrated in FIG. 7, the content protection capability may be defined in the Subelement ID and the points that display the content protection capability may be added, and as illustrated in FIG. 9, information on the content protection capability of the device may be indicated within the device information Subelement.

The content protection capability of the present embodiment may be information indicating whether HDCP 2.0 is supported.

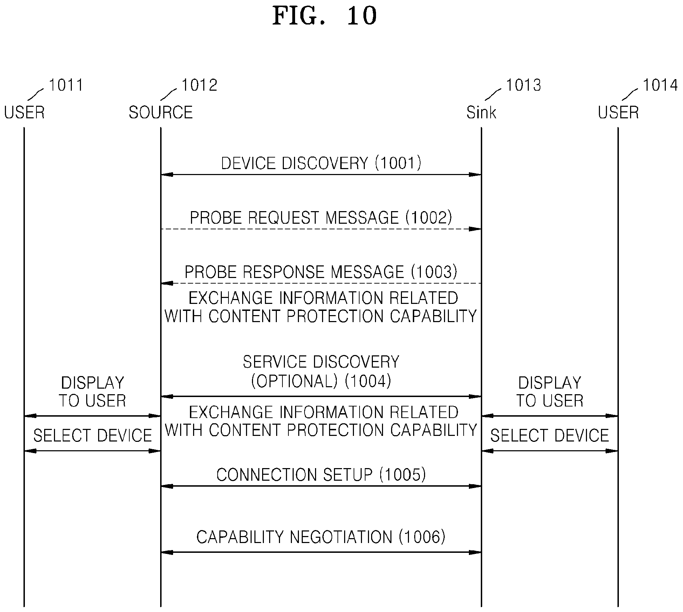

FIG. 10 is a signal flowchart of a WFD communication according to an embodiment of the present invention.

A probe request message 1002 and a probe response message 1003 are exchanged in a device discovery procedure 1001 between a source device 1012 and a sink device 1013. Information on the content protection capability of the device may be included in the probe request message 1002 and the probe response message 1003, and thus information on the content protection capability is exchanged between the source device 1012 and the sink device 1013.

The service discovery procedure 1004 is optional, and whether the procedure is to be performed is determined according to whether the device supports the content protection capability as described with reference to FIG. 9. When the service discovery procedure 1004 is performed, the information related with the content protection capability may be exchanged at the service discovery procedure 1004.

The information related with the content protection capability of the device is exchanged before the connection setup procedure 1005, and information related with the content protection capability of the device is displayed to users 1011 and 1014 of respective devices. The user may select the device with which a connection setup procedure is to be performed based on information related with the content protection performance of the displayed device.

After the information related with the content protection capability is exchanged, the connection setup procedure 1005 with the device selected by the user's input is performed, and thereafter a capability negotiation procedure 1006 is performed. In the capability negotiation procedure 1006, the device that is to play a role of an access point (AP) and a station is determined as in a general Wi-Fi direct scheme. Furthermore, information related with the content protection capability may be set to be exchanged in the capability negotiation procedure.

The invention can also be embodied as computer readable codes on a computer readable recording medium. The computer readable recording medium is any data storage device that can store data which can be thereafter read by a computer system. Examples of the computer readable recording medium include read-only memory (ROM), random-access memory (RAM), CD-ROMs, magnetic tapes, floppy disks, optical data storage devices, etc. The computer readable recording medium can also be distributed over network coupled computer systems so that the computer readable code is stored and executed in a distributed fashion.

While the present invention has been particularly shown and described with reference to exemplary embodiments thereof, it will be understood by those of ordinary skill in the art that various changes in form and details may be made therein without departing from the scope of the present invention as defined by the following claims.

## Claims

1. A method of performing communication between a first device and a second device by using a Wi-Fi direct peer to peer scheme, the method comprising:
receiving, by the first device, information on a content protection capability of the second device in a device discovery procedure (302); and
determining, by the first device, whether to perform a connection setup procedure with the second device based on the received information on the content protection capability (303); transmitting, from the first device, information on a content protection capability of the first device to the second device (1004), wherein the information on the content protection capability of the second device is received in response to the transmitted information on the content protection capability of the first device (301);and the second device determines whether to perform a connection setup procedure with the first device based on the received information relating to the content protection capability of the first device.

2. The method of claim 1, wherein the receiving of the information on the content protection capability of the second device includes receiving a probe response message (1003) including the information on the content protection capability.

3. The method of claim 1 or 2, wherein the transmitting of the information on the content protection capability of the first device includes transmitting a probe request message (1002) including the information on the content protection capability.

4. The method of any one of claims 1-3, wherein the information on the content protection capability is included in a Wi-Fi Display Information Element.

5. The method of claim 4, wherein the information on the content protection capability is included in a Wi-Fi Display Device Information Field within the Wi-Fi Display Information Element.

6. The method of any one of claims 1-5, wherein the information on the content protection capability indicates whether a High-Definition Content Protection 2.0 is supported.

7. A device for performing communication using a Wi-Fi direct peer to peer scheme according to
the method of any preceding claim, the device comprising:
a reception unit (410) that is arranged to receive information on a content protection capability of a second device in a device discovery procedure; and
a determination unit (413) that is arranged to determine whether to perform a connection setup procedure with the second device based on the received information on the content protection capability; further comprising:
a transmission unit (411) that is arranged to transmit information on a content protection capability of the device to the second device,
wherein the reception unit (410) is arranged to receive information on the content protection capability of the second device in response to the transmitted information on the content protection capability of the device.

8. The device of claim 7, wherein the reception unit (410) is arranged to receive a probe response message (1003) including the information on the content protection capability.

9. The device of claim 7 or 8, wherein the transmission unit (411) is arranged to transmit a probe request message including the information on the content protection capability.

10. The device of any one of claims 7-9, wherein the information on the content protection capability is included in a Wi-Fi Display Information Element.

11. The device of claim 10, wherein the information on the content protection capability is included in a Wi-Fi Display Device Information Field within the Wi-Fi Display Information Element.

12. The device of any one of claims 7-11, wherein the information on the content protection capability indicates whether a High-Definition Content Protection 2.0 is supported.

13. A computer-readable recording medium having recorded there-on a program which, when run on a computer, causes the computer to carry out the steps of a method disclosed in any one of claims 1 to 6.

## Patentansprüche

1. Verfahren zum Durchführen von Kommunikation zwischen einer ersten Einrichtung und einer zweiten Einrichtung unter Verwendung eines direkten WiFi-Peer-to-Peer-Schemas, das Verfahren umfassend:
Empfangen, durch die erste Einrichtung, von Informationen über eine Inhaltsschutzfähigkeit der zweiten Einrichtung in einer Einrichtungsentdeckungsprozedur (302) und
Bestimmen, durch die erste Einrichtung, ob eine Verbindungsaufbauprozedur mit der zweiten Einrichtung durchgeführt werden soll, basierend auf den empfangenen Informationen über die Inhaltsschutzfähigkeit (303); Übertragen von Informationen über eine Inhaltsschutzfähigkeit der ersten Einrichtung von der ersten Einrichtung zur zweiten Einrichtung (1004), wobei die Informationen über die Inhaltsschutzfähigkeit der zweiten Einrichtung als Reaktion auf die übertragenen Informationen über die Inhaltsschutzfähigkeit der ersten Einrichtung (301) empfangen werden; und die zweite Einrichtung basierend auf den empfangenen Informationen bezüglich der Inhaltsschutzfähigkeit der ersten Einrichtung bestimmt, ob eine Verbindungsaufbauprozedur mit der ersten Einrichtung durchgeführt werden soll.

2. Verfahren nach Anspruch 1, wobei das Empfangen der Informationen über die Inhaltsschutzfähigkeit der zweiten Einrichtung Empfangen einer Sondierungsantwortnachricht (1003), die die Informationen über die Inhaltsschutzfähigkeit umfasst, beinhaltet.

3. Verfahren nach Anspruch 1 oder 2, wobei das Übertragen der Informationen über die Inhaltsschutzfähigkeit der ersten Einrichtung Übertragen einer Sondierungsanfragenachricht (1002), die die Informationen über die Inhaltsschutzfähigkeit umfasst, beinhaltet.

4. Verfahren nach einem der Ansprüche 1-3, wobei die Informationen über die Inhaltsschutzfähigkeit in einem WiFi-Anzeigeinformationselement enthalten sind.

5. Verfahren nach Anspruch 4, wobei die Informationen über die Inhaltsschutzfähigkeit in einem WiFi-Anzeigeeinrichtungsinformationsfeld im WiFi-Anzeigeinformationselement enthalten sind.

6. Verfahren nach einem der Ansprüche 1-5, wobei die Informationen über die Inhaltsschutzfähigkeit angeben, ob ein High-Definition-Inhalt-Schutz 2.0 unterstützt wird.

7. Einrichtung zum Durchführen von Kommunikation unter Verwendung eines direkten WiFi-Peer-to-Peer-Schemas gemäß dem Verfahren nach einem der vorangegangenen Ansprüche, die Einrichtung umfassend:
eine Empfangseinheit (410), die dazu ausgelegt ist, Informationen über eine Inhaltsschutzfähigkeit einer zweiten Einrichtung in einer Einrichtungsentdeckungsprozedur zu empfangen; und
eine Bestimmungseinheit (413), die dazu ausgelegt ist, basierend auf den empfangenen Informationen über die Inhaltsschutzfähigkeit zu bestimmen, ob eine Verbindungsaufbauprozedur mit der zweiten Einrichtung durchgeführt werden soll; ferner umfassend:
eine Übertragungseinheit (411), die dazu ausgelegt ist, Informationen über eine Inhaltsschutzfähigkeit der Einrichtung zur zweiten Einrichtung zu übertragen,
wobei die Empfangseinheit (410) dazu ausgelegt ist, Informationen über die Inhaltsschutzfähigkeit der zweiten Einrichtung als Reaktion auf die übertragenen Informationen über die Inhaltsschutzfähigkeit der Einrichtung zu empfangen.

8. Einrichtung nach Anspruch 7, wobei die Empfangseinheit (410) dazu ausgelegt ist, eine Sondierungsantwortnachricht (1003), die die Informationen über die Inhaltsschutzfähigkeit beinhaltet, zu empfangen.

9. Einrichtung nach Anspruch 7 oder 8, wobei die Übertragungseinheit (411) dazu ausgelegt ist, eine Sondierungsanfragenachricht, die die Informationen über die Inhaltsschutzfähigkeit beinhaltet, zu übertragen.

10. Einrichtung nach einem der Ansprüche 7-9, wobei die Informationen über die Inhaltsschutzfähigkeit in einem WiFi-Anzeigeinformationselement enthalten sind.

11. Einrichtung nach Anspruch 10, wobei die Informationen über die Inhaltsschutzfähigkeit in einem WiFi-Anzeigeeinrichtungsinformationsfeld im WiFi-Anzeigeinformationselement enthalten sind.

12. Einrichtung nach einem der Ansprüche 7-11, wobei die Informationen über die Inhaltsschutzfähigkeit angeben, ob ein High-Definition-Inhalt-Schutz 2.0 unterstützt wird.

13. Computerlesbares Aufzeichnungsmedium, das ein darauf aufgezeichnetes Programm aufweist, das, wenn es auf einem Computer läuft, bewirkt, dass der Computer die Schritte eines Verfahrens nach einem der Ansprüche 1 bis 6 ausführt.

## Revendications

1. Procédé de réalisation d'une communication entre un premier dispositif et un second dispositif en utilisant un schéma poste-à-poste direct Wi-Fi, le procédé comprenant :
la réception, par le premier dispositif, d'informations sur une capacité de protection de contenu du second dispositif dans une procédure de découverte de dispositif (302) ; et
la détermination, par le premier dispositif, permettant de savoir s'il faut réaliser une procédure d'établissement de connexion avec le second dispositif d'après les informations reçues sur la capacité de protection de contenu (303) ; la transmission, par le premier dispositif, d'informations sur une capacité de protection de contenu du premier dispositif au second dispositif (1004), dans lequel les informations sur la capacité de protection de contenu du second dispositif sont reçues en réponse aux informations transmises sur la capacité de protection de contenu du premier dispositif (301) ; et le second dispositif détermine s'il faut réaliser une procédure d'établissement de connexion avec le premier dispositif d'après les informations reçues relatives à la capacité de protection de contenu du premier dispositif.

2. Procédé selon la revendication 1, dans lequel la réception des informations sur la capacité de protection de contenu du second dispositif comporte la réception d'un message de réponse d'investigation (1003) comportant les informations sur la capacité de protection de contenu.

3. Procédé selon la revendication 1 ou 2, dans lequel la transmission des informations sur la capacité de protection de contenu du premier dispositif comporte la transmission d'un message de demande d'investigation (1002) comportant les informations sur la capacité de protection de contenu.

4. Procédé selon l'une quelconque des revendications 1 à 3, dans lequel les informations sur la capacité de protection de contenu sont incluses dans un élément d'informations d'affichage Wi-Fi.

5. Procédé selon la revendication 4, dans lequel les informations sur la capacité de protection de contenu sont incluses dans un champ d'informations de dispositif d'affichage Wi-Fi au sein de l'élément d'informations d'affichage Wi-Fi.

6. Procédé selon l'une quelconque des revendications 1 à 5, dans lequel les informations sur la capacité de protection de contenu indiquent si une protection de contenu haute définition 2.0 est prise en charge.

7. Dispositif de réalisation d'une communication à l'aide d'un schéma poste-à-poste direct Wi-Fi selon le procédé d'une quelconque revendication précédente, le dispositif comprenant :
une unité de réception (410) qui est conçue pour recevoir des informations sur une capacité de protection de contenu d'un second dispositif dans une procédure de découverte de dispositif ; et
une unité de détermination (413) qui est conçue pour déterminer s'il faut réaliser une procédure d'établissement de connexion avec le second dispositif d'après les informations reçues sur la capacité de protection de contenu ; comprenant en outre :
une unité de transmission (411) qui est conçue pour transmettre des informations sur une capacité de protection de contenu du dispositif au second dispositif,
dans lequel l'unité de réception (410) est conçue pour recevoir des informations sur la capacité de protection de contenu du second dispositif en réponse aux informations transmises sur la capacité de protection de contenu du dispositif.

8. Dispositif selon la revendication 7, dans lequel l'unité de réception (410) est conçue pour recevoir un message de réponse d'investigation (1003) comportant les informations sur la capacité de protection de contenu.

9. Dispositif selon la revendication 7 ou 8, dans lequel l'unité de transmission (411) est conçue pour transmettre un message de demande d'investigation comportant les informations sur la capacité de protection de contenu.

10. Dispositif selon l'une quelconque des revendications 7 à 9, dans lequel les informations sur la capacité de protection de contenu sont incluses dans un élément d'informations d'affichage Wi-Fi.

11. Dispositif selon la revendication 10, dans lequel les informations sur la capacité de protection de contenu sont incluses dans un champ d'informations de dispositif d'affichage Wi-Fi au sein de l'élément d'informations d'affichage Wi-Fi.

12. Dispositif selon l'une quelconque des revendications 7 à 11, dans lequel les informations sur la capacité de protection de contenu indiquent si une protection de contenu haute définition 2.0 est prise en charge.

13. Support d'enregistrement lisible par ordinateur sur lequel est enregistré un programme qui, lorsqu'il est exécuté sur un ordinateur, amène l'ordinateur à effectuer les étapes d'un procédé divulgué dans l'une quelconque des revendications 1 à 6.
